# EUROPÄISCHE PATENTSCHRIFT

(11) **EP 0 753 403 B1**
(45) Veröffentlichungstag und Bekanntmachung des Hinweises auf die Patenterteilung: **22.01.2003**
(21) Anmeldenummer: 96110596.2
(22) Anmeldetag: 01.07.1996
(51) Int. Cl.: B32B 27/32

(54) **Mehrschichtige, sterilisationsfeste Tiefziehfolie mit peelbarer Siegelschicht**
Multilayered, deep drawawble film resistant to sterilisation having a peelable seal layer
Feuille multicouche emboutissable résistant à la stérilisation, avec une couche scellable et pelable

(30) Priorität: 13.07.1995 DE 19525501
(43) Veröffentlichungstag der Anmeldung: 15.01.1997
(73) Patentinhaber: Wipak Walsrode GmbH & Co. KG, 29656 Walsrode (DE)
(72) Erfinder: Gasse, Andreas Siegmar, Dr., 29664 Walsrode (DE); Klein, Rudi, 29664 Walsrode (DE)
(74) Vertreter: Kutzenberger, Helga, Dr.

(56) Entgegenhaltungen:
- EP-A- 0 692 373
- EP-A- 0 755 778
- EP-A- 0 781 652
- WO-A-93/17863

## Beschreibung

Die vorliegende Erfindung betrifft Mehrschichtfolien für Verpackungsanwendungen, vorzugsweise im Lebenmittelbereich. Die Folien sind dadurch gekennzeichnet, daß sie tiefziehbar, siegelbar und mit einer peelbaren Siegelschicht ausgestattet sind, die peelbar gegen sich selbst, gegen Linear Low Density Polyethylen (LLDPE) und gegen Polypropylen (PP) sind und zeichnen sich dadurch aus, daß sie für Sterilisationsanwendungen einsetzbar sind.

Das leichte Öffnen von Verpackungen ist im Bereich der Folienanwendung schon seit längerem ein wichtiges Thema. Leicht zu öffnende Verpackungen sind besonders verbraucherfreundlich und werden deswegen vermehrt verwendet. Um dies zu erreichen müssen Verbundfolien sogenannte Peelsiegelschichten enthalten. Erste Anwendungen solcher Verpackungssysteme wurden im Bereich der Medicalverpackung beobachtet (*Bakker, M*., The Wiley Encyclopedia of Packaging Technology, S. 396 f), wo ein Öffnen der Verpackung ohne zusätzliches Werkzeug (z.B. Schere) Verletzungen des Packungsinhaltes verhindert.

Peelsiegelschichten enthalten in der Regel Polymerblends aus Polyethylen (LDPE) und einer zweiten Komponente. Als zweite Komponente kommt zum Beispiel Polybutylen (PB) zum Einsatz. Solche Folien haben den Nachteil, daß sie nicht heißdampfsterilisiert werden können.

Die meisten heißdampfterilisierbaren Systeme sind nicht peelbar, da üblicherweise gleiche Siegelschichten (z.B. aus PP) in den sogenannten Deckel- und Muldenfolien der betreffenden Tiefziehverpackung eingesetzt werden und zu festen Versiegelungen führen.

In DE 2255026 werden jedoch Packungen beschrieben, die sterilisierbar sind und sich leichter öffnen lassen. Bei diesen Packungen muß aber ein Teil der Siegelschicht beim Öffnen im Bereich der Siegelnaht komplett auf- und herausgerissen werden. Hierzu ist immer noch ein erheblicher Kraftaufwand erforderlich und gelingt in der Regel nur mit speziell gestalteten Aufreißlaschen.

In DE 3545768 wird ein System aus Deckel- und Muldenfolie beschrieben, welches dadurch gekennzeichnet ist, daß die jeweils die Verbindung bewirkenden Siegelschichten der Mehrschichtfolien einerseits aus einem Copolymerisat aus Ethylen/Buten-1 (spezielles LLDPE) und andererseits aus einem Polypropylen oder einem Copolymerisat aus Ethylen/Propylen (E/P). Dieses System hat den Nachteil, daß es ausschließlich in dieser Siegelkombination eingesetzt werden kann. Liegt beispielsweise die Siegelschicht der Muldenfolie fest, gibt es nur eine Möglichkeit für die Siegelschicht der Deckelfolie.

In der Patentliteratur findet man ferner Folien die Polymerblends aus LLDPE und E/P enthalten (EP 350859-A, GB 2152515-A, EP-253792-A, JP1152144-A, EP 423387-A, US 5139855-A, WO 9214784-A2, JP 58217534-A, JP 57159832, EP 397517, EP 0350859-B1, EP 0260038 B1). Es wird beschrieben, daß durch solche Polymerblends insbesondere die die Folientransparenz und die Schrumpfeigenschaften positiv beeinflußt werden. Diese Folien kommen mit dieser einen beschrieben Polymerblendschicht aus. Einschichtige Folien sind aber als siegelbare Tiefziehfolien, die mindestens eine Trägerschicht und eine Siegelschicht aufweisen und damit zweischichtig sein müssen, nicht einsetzbar.

Daher stellt sich die Aufgabe eine Folie bereitzustellen, die tiefziehbar, siegelbar und sterilisierbar (Heißdampfsterilisation 121°C/ 30 Minuten) ist. Die Folie muß bei der Siegelung gegen sich selbst bzw. eine Folie mit gleicher Siegelschicht, gegen eine Folie mit LLDPE-Siegelschicht und gegen einen Folie mit PP-Siegelschicht auch nach der Sterilisation eine peelbare Verbindung ergeben. Die Folie muß transparent sein und darf nach dem Sterilisieren nicht eintrüben.

Überraschenderweise gelang dies durch eine mehrschichtige, sterilisationsfeste Tiefziehfolie mit peelbarer Siegelschicht, die dadurch gekennzeichnet ist, daß die Folie aus
- mindestens einer Siegelschicht (S) aus einem Polymerblend, daß aus 30 bis 80 Gew.-% aus einem Ethylen/Propylen-Copolymer und 20 bis 70 Gew.-% aus einem Linear Low Density Polyethylen (LLDPE) mit einem Kristallitschmelzpunkt größer 121°C und einer Dichte von 915 bis 950 kg/m³, vorzugsweise zwischen 925 und 940 kg/m³ und
- mindestens einer thermoplastischen Trägerschicht (T) mit einem Kristallitschmelzpunkt größer 155°C aus der Gruppe der Polyamide, Polystyrole, Polyester, Polycarbonate, Polypropylene, Ethylen/Vinylalkohole und
- mindestens einer Verbindungsschicht (V)
besteht, so angeordnet, daß eine Trägerschicht (T) und eine Siegelschicht (S) auf den Außenseiten der Folie liegen.

Das Ethylen/Propylen-Copolymer hat einen Ethylengehalt von 1 bis 9 Mol-%.

Das LLDPE ist üblicherweise ein Copolymer aus Ethylen und einem C3 bis C12 alpha-Olefin mit einem Melt Flow Index (MFI 190/2,16) von 0,1 bis 20 g/10min vorzugsweise ein Copolymer aus Ethylen und einem C4, C6 oder C8-alpha-Olefin.

Die Trägerschicht (T) besteht vorzugsweise aus Polyamid, wobei das Polyamid aus den aliphatischen Polyamiden PA 6, PA 11, PA 12, PA 66, PA 6.66, PA 6.8, PA 6.9, PA 6.10, PA 6.11, PA 6.12, einem Copolymer aus den darin enthaltenen Monomereinheiten, aus einem aromatischen oder teilaromatischem Polyamid oder aus einer Mischung der genannten Polyamide besteht.

Die Verbindungsschicht besteht aus einem Klebstoffsystem oder einem polymeren Haftvermittler, wobei das Klebstoffsystem vorzugsweise ein 2-Komponenten Polyurethan-Klebstoffsystem und der polymere Haftvermittler ein anhydridmodifiziertes Polyethylen oder Polyethylencopolymer, ein Säurecopolymer des Ethylen, ein säuremodifiziertes Ethylenvinylacetat, ein säuremodifiziertes Ethylen(meth)acrylat, anhydridmodifiziertes Ethylen(meth)acrylat, ein anhydridmodifiziertes Ethylenvinylacetat, ein säure-/acrylatmodifiziertes Ethylenvinylacetat oder ein Polymerblend ist, enthaltend mindestens einen der in diesem Abschnitt genannten Haftvermittler, und einen Kristallitschmelzpunkt von größer oder gleich 121°C hat. Vorzugsweise ist der Haftvermittler ein anhydridmodifiziertes Ethylen/Propylen-Copolymer oder anhydridmodifiziertes Polyethylencopolymer ist; unter diesen sind die maleinsäureanhydridgepfropften Ethylen/Propylen-Copolymere oder ein maleinsäureanhydridgepfropften Polyethylencopolymere zu bevorzugen.

Die Folie sollten vorzugsweise den Aufbau
- T / V / S,
- T / EVOH / T / V / S,
- T / V / T / V / S,
- T / V / EVOH / V / S oder
- T / V / EVOH / V / T / V / S
aufweisen, wobei sich zwischen den Schichten V und-S gegebenenfalls Zwischenschichten befinden und EVOH ein Ethylen/Vinylalkohol-Copolymer ist. Ferner sind Aufbauten mit Polymerblends uns mehreren Trägerschichten denkbar wie
- T / (PA+EVOH) / T / V / S oder
- T / (PA+I) / T / V / S,
wobei PA ein Polyamid und I ein Ionomer sind.

Die Gesamtdicke der Folie liegt normalerweise im Bereich 15 bis 400 µm, vorzugsweise 50 bis 300 µm, wobei der Anteil der Siegelschicht an der Gesamtfoliendicke 5 bis 90%, vorzugsweise 10 bis 80%, betragen sollte.

Grundsätzlich kann die Folie zusätzlich übliche Zusatz- und Hilfsstoffe enthalten. Zur Variation der Gleiteigenschaften der Folie kann mindestens eine Schicht Gleitmittel- und/oder Antiblockmittel enthalten. Antiblockmittel sollten dabei vorzugsweise in die Folienaußenschichtengegeben werden, Gleitmittel auch in innenliegende Schichten.

Die Folie ist für die Bedruckung geeignet. Es kann mindestens eine Schicht eingefärbt oder bedruckt sein.

Die Folie ist für Verpackungsanwendungen, besonders für die Verpackung von Lebensmitteln geeignet. Die Folie kann dabei sowohl für Heißabfüllungen als auch für die Erhitzung von Füllgut in der Folie bis hin zur Sterilisation gut eingesetzt werden. Die Folie ist geeignet für die Verpackung von Fleisch- und Wurstprodukten, Milchprodukten, Fisch- und Räucherwaren, Fertiggerichten, Brot- und Backwaren und medizinisch-technischen Geräten.

Überraschenderweise ist es durch die erfindungsgemäße Zusammensetzung der Folie gelungen die besonderen Anforderungen an die Tiefziehbarkeit, Siegelbarkeit und an die Peelbarkeit vor und nach der Sterilisation zu erfüllen. Nach dem Stand der Technik war nicht zu erwarten, daß es eine Siegelschichtzusammensetzung gibt, die als sterilisationsfeste Peelschicht bei Siegelungen gegen sich selbst, gegen LLDPE und gegen PP einzusetzen ist.

Für die Herstellung der Folie kommen Coextrusion (Blasfolie oder Flachfilm) oder auch die Einzelfertigung der benötigten Schichten in Frage, die dann anschließend miteinander kaschiert werden. Auch kombinierte Verfahren sind denkbar.

Es kommen bekannte, nach dem Stand der Technik übliche Anlagenkonzepte zur Anwendung, wobei im Fall der Blasfoliencoextrusion der Fertigungsvorgang dadurch gekennzeichnet ist, daß die Schmelze zum Schlauch geformt wird, welcher aufgeblasen, gekühlt und am anderen nun kalt gewordenem Ende von Quetschwalzen flachgelegt und geschlossen gehalten wird und anschließend die Folie aufgewickelt wird. Im Fall der Flachfoliencoextrusion werden sogenannte Chill-Roll-Anlagen eingesetzt, die als besonderes Merkmal große Kühlwalzen aufweisen, die den aus dem Werkzeug austretenden Schmelzefilm aufnehmen.

Zur Untersuchung der Peelbarkeit wurden die Siegelfestigkeiten (SF) der Folie nach der Siegelung
- gegen sich selbst
- gegen LLDPE und
- gegen E/P
nach je zwei Verfahren geprüft:
- siegeln, dann messen
- siegeln, dann sterilisieren, dann messen

Die Sterilisation erfolgte dazu 30 Minuten bei 121°C im Gegendruckautoklaven.

Als Siegelfestigkeit (SF) wird die Höchstkraft in N angegeben, die erforderlich ist, um eine unter definierten Bedingungen (hier Druck: 50 N/cm²; Zeit: 0,5 s; Temperatur) hergestellte Siegelnaht zu trennen. Die Siegelfestigkeit wird in N angegeben, die Streifenbreite als Index hinzugefügt (N/15mm).

Aus der Bahnmitte werden Probenstreifen entnommen. Zur Siegelung werden sie mit den zu versiegelnden Flächen aufeinander gelegt und so zwischen die Siegelbacken gehalten, daß die Probe an jeder Seite mindestens 1 cm übersteht. Die Siegelung erfolgt senkrecht zur Folienlaufrichtung.

Aus der so hergestellten Siegelnaht wird aus der Mitte in Folienlaufrichtung mit einem Prüfstreifenschneider ein 15 mm breiter Prüfstreifen geschnitten.

Mit einer Zugfestigkeitsprüfmaschine wird er auf Siegelfestigkeit untersucht, indem er senkrecht zur Siegelnaht getrennt wird. Es wird der Maximalwert der beim Zerreißen auftretenden Kraft angegeben, ferner das Bruchbild (Peelbarkeit) gemäß
- Folien gerissen (nicht peelbar): **" np "**
- Folien trennen sich wieder glatt voneinander (peelbar): **" p ".**

Als Meßgeräte wurden verwendet:
- Siegelgerät (Fa. Brugger): Siegelbacken glatt, beidseitig beheizt, Siegelfläche (20 x 60) mm²
- Prüfstreifenschneider: Schnittbreite 15 mm
- Zugfestigkeitsprüfmaschine: 100 mm/min Prüfgeschwindigkeit, 2 mm Einspannlänge.

Der Gegenstand der Erfindung soll an Hand folgender Beispiele erklärt werden.

### A. Vergleichsbeispiel 1:

Mehrschichtige Folie des Typs T / V / S mit dem Aufbau
**PA / K / (E/P)**
70 / - / 50 µm

Die dreischichtige Folie wurde durch Kaschierung mit einem lösungsmittelhaltigen 2-Komponenten-Polyurethan-Klebstoffsystem K hergestellt (Verbindungsschicht V). Die Gesamtdicke beträgt 120 µm. Als Trägerschicht T wurde Polyamid 6 (PA) der Dichte 1140 kg/m³ mit dem Kristallitschmelzpunkt 219°C und einer relativen Lösungsviscosität von 3,8 (PA-Konzentration 1%, Temperatur 25°C, gemessen in m-Kresol) eingesetzt, das zuvor als Flachfilm gefertigt wurde. Als Siegelschicht S wurde ein Ethylen/Propylen-Copolymer (E/P) der Dichte 900 kg/m³ mit dem Kristallitschmelzpunkt 138°C und einem Schmelzindex (MFI 230/2,16) von 5,0 g/10 min eingesetzt, das zuvor als Blasfolie gefertigt wurde.

### B. Vergleichsbeispiel 2:

Mehrschichtige Folie des Typs T / V / S mit dem Aufbau
**PA / K / (90%E/P + 10%LLDPE)**
70 / - / 50 µm

Die Fertigung der Folie erfolgte wie in Vergleichsbeispiel 1 (A). Die Trägerschicht T und die Verbindungsschicht V sind wie in Vergleichsbeispiel 1 beschrieben aufgebaut. Als Siegelschicht S wurde ein Polymerblend aus 90 % Ethylen/Propylen-Copolymer (E/P) der Dichte 900 kg/m³ mit dem Kristallitschmelzpunkt 138°C und einem Schmelzindex (MFI 230/2,16) von 5,0 g/10min und 10 % aus einem Copolymer aus Ethylen und Okten (LLDPE) der Dichte 935 kg/m³ und dem Kristallitschmelzpunkt 126°C und einem Schmelzindex (MFI 190/2,16) von 4,4 g/10min eingesetzt. Die Siegelschicht wurde zuvor als Blasfolie gefertigt.

### C. Beispiel 1:

Mehrschichtige Folie des Typs T / V / S mit dem Aufbau
**PA / K / (70%E/P + 30%LLDPE)**
70 / - / 50 µm

Die Fertigung der Folie erfolgte wie in Vergleichsbeispiel 1 (A). Die Trägerschicht T und die Verbindungsschicht V sind wie in Vergleichsbeispiel 1 beschrieben aufgebaut. Die Siegelschicht S enthält die gleichen Polymere wie in Vergleichsbeispiel 2 (B) beschrieben, die Zusammensetzung beträgt jedoch 70% Ethylen/Propylen-Copolymer (E/P) und 30% Copolymer aus Ethylen und Okten (LLDPE).

### D. Beispiel 2:

Mehrschichtige Folie des Typs T / V / S mit dem Aufbau
**PA / K / (30%E/P + 70%LLDPE)**
70 / - / 50 µm

Die Fertigung der Folie erfolgte wie in Vergleichsbeispiel 1 (A). Die Trägerschicht T und die Verbindungsschicht V sind wie in Vergleichsbeispiel 1 beschrieben aufgebaut. Die Siegelschicht S enthält die gleichen Polymere wie in Vergleichsbeispiel 2 (B) beschrieben, die Zusammensetzung beträgt jedoch 30 % Ethylen/Propylen-Copolymer (E/P) und 70% Copolymer aus Ethylen und Okten (LLDPE).

### E. Vergleichsbeispiel 3:

Mehrschichtige Folie des Typs T / V / S mit dem Aufbau
**PA / K / (10%E/P + 90%LLDPE)**
70 / - / 50 µm

Die Fertigung der Folie erfolgte wie in Vergleichsbeispiel 1 (A). Die Trägerschicht T und die Verbindungsschicht V sind wie in Vergleichsbeispiel 1 beschrieben aufgebaut. Die Siegelschicht S enthält die gleichen Polymere wie in Vergleichsbeispiel 2 (B) beschrieben, die Zusammensetzung beträgt jedoch 10 % Ethylen/Propylen-Copolymer (E/P) und 90% Copolymer aus Ethylen und Okten (LLDPE).

### F. Vergleichsbeispiel 4:

Mehrschichtige Folie des Typs T / V / S mit dem Aufbau
**PA / K / (LLDPE)**
70 / - / 50 µm

Die Fertigung der Folie erfolgte wie in Vergleichsbeispiel 1 (A). Die Trägerschicht T und die Verbindungsschicht V sind wie in Vergleichsbeispiel 1 beschrieben aufgebaut. Die Siegelschicht S enthält ausschließlich das in Vergleichsbeispiel 2 beschriebene Copolymer aus Ethylen und Okten (LLDPE).

Für die beschriebenen Folien A, B, C, D, E und F sind die gemessenen Siegelfestigkeiten sowie die Peelbarkeit abhängig von der Siegltemperatur in den folgenden Tabellen 1 bis 6 dargestellt. Die Prüfungen wurden wie oben beschrieben durchgeführt.

**Tabelle 1**

| Siegelfestigkeiten (SF) nach der Siegelung der Folien A, B, C, D, E und F gegen sich selbst (keine Sterilisation), sowie Peelbarkeit (p / np). | | | | | | |
|---|---|---|---|---|---|---|
| | **A** | **B** | **C** | **D** | **E** | **F** |
| | **Vergleich 1** | **Vergleich 2** | **Beispiel 1** | **Beispiel 2** | **Vergleich 3** | **Vergleich 4** |
| LLDPE [%] | 0 | 10 | 30 | 70 | 90 | 100 |
| Siegelschicht erfindungsgemäß | nein | nein | ja | ja | nein | nein |

| **Temperatur [°C]** | **SF [N/15mm]** | **SF [N/15mm]** | **SF [N/15mm]** | **SF [N/15mm]** | **SF [N/15mm]** | **SF [N/15mm]** |
|---|---|---|---|---|---|---|
| 120 | 0,3 p | 0,1 p | 0,5 p | 0,1 p | 0 p | 0,7 p |
| 130 | 0,6 p | 7,5 p | 6 p | 0,5 p | 7 p | 9,6 p |
| 140 | 23,2 np | 22 np | 5 p | 8,3 p | 11,6 p | 40,1 np |
| 150 | 49,6 np | 49,4 np | 8,2 p | 10,7 p | 13,1 p | 49,2 np |
| 160 | 57,9 np | 51,3 np | 7 p | 8,5 p | 19,1 p | 56,7 np |
| 170 | 48,8 np | 58,3 np | 7 p | 12,9 p | 19,3 np | 50,9 np |

**Tabelle 2**

| Siegelfestigkeiten (SF) nach der Siegelung der Folien A, B, C, D, E und F gegen LLDPE (keine Sterilisation), sowie Peelbarkeit (p / np). | | | | | | |
|---|---|---|---|---|---|---|
| | **A** | **B** | **C** | **D** | **E** | **F** |
| | Vergleich 1 | Vergleich 2 | Beispiel 1 | Beispiel 2 | Vergleich 3 | Vergleich 4 |
| LLDPE [%] | 0 | 10 | 30 | 70 | 90 | 100 |
| Siegelschicht erfindungsgemäß | nein | nein | ja | ja | nein | nein |

| **Temperatur [°C]** | **SF [N/15mm]** | **SF [N/15mm]** | **SF [N/15mm]** | **SF [N/15mm]** | **SF [N/15mm]** | **SF [N/15mm]** |
|---|---|---|---|---|---|---|
| 120 | 0 p | 0 p | 0 p | 0 p | 0 p | 0,7 p |
| 130 | 0,4 p | 0,4 p | 0,9 p | 0,6 p | 0,6 p | 9,6 p |
| 140 | 1,2 p | 0,7 p | 2,3 p | 7 p | 22,8 np | 40,1 np |
| 150 | 3,5 p | 1,3 p | 6,3 p | 9,4 p | 27,7 np | 49,2 np |
| 160 | 1,4 p | 4,7 p | 4,7 p | 12,3 p | 33 np | 56,7 np |
| 170 | 2,4 p | 2,3 p | 6,5 p | 10,5 p | 33,8 np | 50,9 np |

**Tabelle 3**

| Siegelfestigkeiten (SF) nach der Siegelung der Folien A, B, C, D, E und F gegen E/P (keine Sterilisation), sowie Peelbarkeit (p / np). | | | | | | |
|---|---|---|---|---|---|---|
| | **A** | **B** | **C** | **D** | **E** | **F** |
| | Vergleich 1 | Vergleich 2 | Beispiel 1 | Beispiel 2 | Vergleich 3 | Vergleich 4 |
| LLDPE [%] | 0 | 10 | 30 | 70 | 90 | 100 |
| Siegelschicht erfindungsgemäß | nein | nein | ja | ja | nein | nein |

| **Temperatur [°C]** | **SF [N/15mm]** | **SF [N/15mm]** | **SF [N/15mm]** | **SF [N/15mm]** | **SF [N/15mm]** | **SF [N/15mm]** |
|---|---|---|---|---|---|---|
| 120 | 0,3 p | 0 p | 0,3 p | 0,1 p | 0,5 p | 0 p |
| 130 | 0,6 p | 14,4 p | 6,1 p | 0,6 p | 1,4 p | 0,4 p |
| 140 | 23,2 np | 31,5 np | 6,5 p | 6,9 p | 1,5 p | 1,2 p |
| 150 | 49,6 np | 43,8 np | 6,3 p | 2,7 p | 1,5 p | 3,5 p |
| 160 | 57,9 np | 53,9 np | 7,4 p | 3,4 p | 1,6 p | 1,4 p |
| 170 | 48,8 np | 53,3 np | 7,5 p | 3,1 p | 1,5 p | 2,4 p |

**Tabelle 4**

| Siegelfestigkeiten (SF) nach der Siegelung der Folien A, B, C, D, E und F gegen sich selbst und anschließender Sterilisation der Siegelnaht (121°C / 30 Minuten), sowie Peelbarkeit (p / np). | | | | | | |
|---|---|---|---|---|---|---|
| | **A** | **B** | **C** | **D** | **E** | **F** |
| | Vergleich 1 | Vergleich 2 | Beispiel 1 | Beispiel 2 | Vergleich 3 | Vergleich 4 |
| LLDPE [%] | 0 | 10 | 30 | 70 | 90 | 100 |
| Siegelschicht erfindungsgemäß | nein | nein | ja | ja | nein | nein |

| **Temperatur [°C]** | **SF [N/15mm]** | **SF [N/15mm]** | **SF [N/15mm]** | **SF [N/15mm]** | **SF [N/15mm]** | **SF [N/15mm]** |
|---|---|---|---|---|---|---|
| 120 | 0 p | 13,2 p | 5,1 p | 0,5 p | 0,9 p | 0,7 p |
| 130 | 5,7 p | 16,3 np | 4,5 p | 4,2 p | 3,8 p | 30,1 np |
| 140 | 29,7 np | 28,5 np | 6,6 p | 6,3 p | 11,1 p | 28,4 np |
| 150 | 34,3 np | 36,6 np | 9,2 p | 6 p | 11,7 np | 34,7 np |
| 160 | 38,3 np | 42,1 np | 4,2 p | 5,3 p | 11,7 np | 37,1 np |
| 170 | 37 np | 45,3 np | 5,4 p | 7 p | 12,2 np | 37,7 np |

**Tabelle 5**

| Siegelfestigkeiten (SF) nach der Siegelung der Folien A, B, C, D, E und F gegen LLDPE und anschließender Sterilisation der Siegelnaht (121°C / 30 Minuten), sowie Peelbarkeit (p / np). | | | | | | |
|---|---|---|---|---|---|---|
| | **A** | **B** | **C** | **D** | **E** | **F** |
| | Vergleich 1 | Vergleich 2 | Beispiel 1 | Beispiel 2 | Vergleich 3 | Vergleich 4 |
| LLDPE [%] | 0 | 10 | 30 | 70 | 90 | 100 |
| Siegelschicht erfindungsgemäß | nein | nein | ja | ja | nein | nein |

| **Temperatur [°C]** | **SF [N/15mm]** | **SF [N/15mm]** | **SF [N/15mm]** | **SF [N/15mm]** | **SF [N/15mm]** | **SF [N/15mm]** |
|---|---|---|---|---|---|---|
| 120 | 0 p | 0 p | 0 p | 0,6 p | 0,6 p | 0,7 p |
| 130 | 0 p | 0,3 p | 0,5 p | 1,1 p | 1 p | 30,1 np |
| 140 | 0,5 p | 1,3 p | 3,5 p | 6,2 p | 7,1 p | 28,4 np |
| 150 | 0,6 p | 2,5 p | 5,6 p | 6,9 p | 16,1 np | 34,7 np |
| 160 | 0,6 p | 0,8 p | 4 p | 5,1 p | 13,5 np | 37,1 np |
| 170 | 0,7 p | 2,6 p | 4 p | 9,8 p | 21,6 np | 37,7 np |

**Tabelle 6**

| Siegelfestigkeiten (SF) nach der Siegelung der Folien A, B, C, D, E und F gegen E/P und anschließender Sterilisation der Siegelnaht (121°C / 30 Minuten), sowie Peelbarkeit (p / np). | | | | | | |
|---|---|---|---|---|---|---|
| | **A** | **B** | **C** | **D** | **E** | **F** |
| | Vergleich 1 | Vergleich 2 | Beispiel 1 | Beispiel 2 | Vergleich 3 | Vergleich 4 |
| LLDPE [%] | 0 | 10 | 30 | 70 | 90 | 100 |
| Siegelschicht erfindungsgemäß | nein | nein | ja | ja | nein | nein |

| **Temperatur [°C]** | **SF [N/15mm]** | **SF [N/15mm]** | **SF [N/15mm]** | **SF [N/15mm]** | **SF [N/15mm]** | **SF [N/15mm]** |
|---|---|---|---|---|---|---|
| 120 | 0 p | 0,4 p | 0 p | 0,3 p | 0 p | 0 p |
| 130 | 5,7 p | 16,7 np | 3,2 p | 0,4 p | 0,1 p | 0 p |
| 140 | 29,7 np | 31,9 np | 6,1 p | 0,6 p | 0,5 p | 0,5 p |
| 150 | 34,3 np | 35,5 np | 3,6 p | 0,8 p | 0,5 p | 0,6 p |
| 160 | 38,3 np | 40,6 np | 4,9 p | 1,2 p | 0,6 p | 0,6 p |
| 170 | 37 np | 39,9 np | 5,8 p | 1,9 p | 0,8 p | 0,7 p |

Gemäß der zuvor beschriebenen Aufgabe, daß die Folie bei der Siegelung gegen sich selbst bzw. eine Folie mit identischer Siegelschicht, gegen eine Folie mit LLDPE-Siegelschicht und gegen einen Folie mit E/P-Siegelschicht auch nach der Sterilisation eine peelbare Verbindung ergeben muß, sind Siegelfestigkeiten SF <15 N/15 mm für die beschriebenen Siegelkombinationen (vor und nach Sterilisation) zu erzielen.

Betrachtet man hierzu die Meßergebnisse, die in den Tabellen 1 bis 6 dargestellt sind, so wird deutlich, daß diese Forderung von den erfindungsgemäß hergestellten Folien C und D voll erfüllt wird.

Bei den Folien A und B (die Siegelschicht enthält weniger LLDPE als die erfindungsgemäßen Folien) erreicht man die niedrigen SF-Werte zwar bei der Siegelung gegen LLDPE (Tabelle 2 und 5) nicht aber bei der Siegelung gegen sich selbst (Tabelle 1 und 4) und auch nicht bei der Siegelung gegen E/P (Tabelle 3 und 6).

Bei den Folien E und F (die Siegelschicht enthält mehr LLDPE als die erfindungsgemäßen Folien) erreicht man die niedrigen SF-Werte zwar bei der Siegelung gegen E/P (Tabelle 3 und 6) nicht aber bei der Siegelung gegen sich selbst (Tabelle 1 und 4) und auch nicht bei der Siegelung gegen LLDPE (Tabelle 2 und 4).

Nach der Siegelung von Folien kann man unterscheiden zwischen solchen Verbindungen, die ab einer bestimmten Temperatur fest versiegelt und damit nicht peelbar (np) sind und solchen, die unabhängig von der Siegeltemperatur trotz einer Siegelfestigkeit bis zu 15 N/15 mm wieder voneinander getrennt werden können und damit peelbar (p) sind.

Analog zu den Siegelfestigkeiten ist gemäß der Kennzeichnung p und np aus den Tabellen 1 bis 6 zu erkennen, daß die erfindungsgemäß hergestellten Folien C und D bei jeder Siegeltemperatur bei der Siegelung gegen sich selbst bzw. eine Folie mit identischer Siegelschicht, gegen eine Folie mit LLDPE-Siegelschicht und gegen einen Folie mit E/P-Siegelschicht vor und nach der Sterilisation peelbar (p) sind.

Bei den Folien A und B (die Siegelschicht enthält weniger LLDPE als die erfindungsgemäßen Folien) erreicht man peelbare Verbindungen zwar bei der Siegelung gegen LLDPE (Tabelle 2 und 5) nicht aber bei der Siegelung gegen sich selbst (Tabelle 1 und 4) und auch nicht bei der Siegelung gegen E/P (Tabelle 3 und 6), wo ab einer bestimmten Siegeltemperatur feste Verbindungen erzielt werden, was nicht gewünscht ist.

Bei den Folien E und F (die Siegelschicht enthält mehr LLDPE als die erfindungsgemäßen Folien) erreicht man man peelbare. Verbindungen zwar bei der Siegelung gegen E/P (Tabelle 3 und 6) nicht aber bei der Siegelung gegen sich selbst (Tabelle 1 und 4) und auch nicht bei der Siegelung gegen LLDPE (Tabelle 2 und 4) wo ab einer bestimmten Siegeltemperatur feste Verbindungen erzielt werden, was nicht gewünscht ist.

## Patentansprüche

1. Mehrschichtige, sterilisationsfeste **tiefziehbare Folie** mit peelbarer Siegelschicht, **dadurch gekennzeichnet, daß** die Folie aus
- mindestens einer Siegelschicht (S) aus einem Polymerblend,**das** aus 30 bis 80 Gew.-% aus einem Ethylen/Propylen-Copolymer und 20 bis 70 Gew.-% aus einem Linear Low Density Polyethylen (LLDPE) mit einem Kristallitschmelzpunkt größer 121°C und einer Dichte von 915 bis 950 kg/m³ **besteht**, und
- mindestens einer thermoplastischen Trägerschicht (T) mit einem Kristallitschmelzpunkt größer 155°C aus der Gruppe der Polyamide, Polystyrole, Polyester, Polycarbonate, Polypropylene, Ethylen/Vinylalkohole und
- mindestens einer Verbindungsschicht (V)
**besteht, die so angeordnet sind, daß eine Trägerschicht (T) und eine Siegelschicht (S) auf den Außenseiten der Folie liegen.**

2. Folie nach Anspruch 1, **dadurch gekennzeichnet, daß** das Ethylen/Propylen-Copolymer (E/P) einen Ethylengehalt von 1 bis 9 Mol-% aufweist.

3. Folie nach einem der Ansprüche 1 oder 2, **dadurch gekennzeichnet, daß** das LLDPE ein Copolymer aus Ethylen und einem C3 bis C12 alpha-Olefin mit einem Melt Flow Index (MFI 190/2,16) von 0,1 bis 20 g/10min ist.

4. Folie nach einem der Ansprüche 1 bis 3, **dadurch gekennzeichnet, daß** das LLDPE ein Copolymer aus Ethylen und einem C4, C6 oder C8 alpha-Olefin ist.

5. Folie nach einem der Ansprüche 1 bis 4, **dadurch gekennzeichnet, daß** die Trägerschicht (T) aus Polyamid besteht.

6. Folie nach Anspruch 5, **dadurch gekennzeichnet, daß** das Polyamid aus einem der aliphatischen Polyamide PA 6, PA 11, PA 12, PA 66, PA 6.66, PA 6.8, PA 6.9, PA 6.10, PA 6.11, PA 6.12, einem Copolymer aus den darin enthaltenen Monomereinheiten, aus einem aromatischen oder teilaromatischem Polyamid oder aus einer Mischung der genannten Polyamide besteht.

7. Folie nach einem der Ansprüche 1 bis 6, **dadurch gekennzeichnet, daß** die Verbindungsschicht (V) aus einem Klebstoffsystem oder einem polymeren Haftvermittler besteht.

8. Folie nach Anspruch 7, **dadurch gekennzeichnet, daß** das Klebstoffsystem ein 2-Komponenten Polyurethan-Klebstoffsystem ist.

9. Folie nach Anspruch 7, **dadurch gekennzeichnet, daß** der polymere Haftvermittler ein anhydridmodifiziertes Ethylen/Propylen-Copolymer oder anhydridmodifiziertes Polyethylencopolymer, vorzugsweise ein maleinsäureanhydridgepfropftes Ethylen/Propylen-Copolymer oder ein maleinsäureanhydridgepfropftes Polyethylencopolymer ist.

10. Folie nach einem der Ansprüche 1 bis 9, **dadurch gekennzeichnet, daß** die Folie den Aufbau T / V / S oder T / V / T / V / S aufweist, wobei sich zwischen den Schichten V und S gegebenenfalls Zwischenschichten befinden.

11. Folie nach Anspruch 10, **dadurch gekennzeichnet, daß** die Folie den Aufbau T / EVOH / T / V / S; T / V / EVOH / V / T/V / S oder T / V / EVOH / V / S aufweist, wobei sich zwischen den Schichten V und S gegebenenfalls Zwischenschichten befinden und EVOH für ein Ethylen/-Vinylalkohol-Copolymer steht.

12. Folie nach einem der Ansprüche 1 bis 11, **dadurch gekennzeichnet, daß** die Gesamtdicke der Folie 15 bis 400 µm beträgt.

13. Verwendung einer Folie gemäß einem der Ansprüche 1 bis 12 als Verpackungsfolie.

14. Verwendung einer Folie gemäß einem der Ansprüche 1 bis 11 als Verpackungsfolie für Lebensmittel.

## Claims

1. Multi-layered, sterilization-resistant deep drawable film having a peelable seal layer, **characterised in that** the film consists of
- at least one seal layer (S) of a polymer blend, 30 to 80 wt.% of which consists of an ethylene/propylene copolymer and 20 to 70 wt.% of which consists of a Linear Low Density Polyethylene (LLDPE) with a crystallite melting point above 121°C and a density of 915 to 950 kg/m³, and
- at least one thermoplastic carrier layer (T) with a crystallite melting point above 155°C from the group: polyamides, polystyrenes, polyesters, polycarbonates, polypropylenes, ethylene-vinyl alcohols, and
- at least one bonding layer (V),
which are disposed such that one carrier layer (T) and one seal layer (S) lie on the outside faces of the film.

2. Film according to claim 1, **characterised in that** the ethylene/propylene copolymer (E/P) has an ethylene content of 1 to 9 mol.%.

3. Film according to one of claims 1 to 2, **characterised in that** the LLDPE is a copolymer of ethylene and a C3 to C12 alpha-olefin with a Melt Flow Index (MFI 190/2.16) of 0.1 to 20 g/10 min.

4. Film according to any one of claims 1 to 3, **characterised in that** the LLDPE is a copolymer of ethylene and a C4, C6 or C8 alpha-olefin.

5. Film according to any one of claims 1 to 4, **characterised in that** the carrier layer (T) consists of polyamide.

6. Film according to claim 5, **characterised in that** the polyamide consists of one of the aliphatic polyamides PA 6, PA 11, PA 12, PA 66, PA 6.66, PA 6.8, PA 6.9, PA 6.10, PA 6.11, PA 6.12, a copolymer of the monomeric units contained therein, of an aromatic or a partially aromatic polyamide or of a mixture of the said polyamides.

7. Film according to any one of claims 1 to 6, **characterised in that** the bonding layer (V) consists of an adhesive system or a polymeric adhesion promoter.

8. Film according to claim 7, **characterised in that** the adhesive system is a 2-component polyurethane adhesive system.

9. Film according to claim 7, **characterised in that** the polymeric adhesion promoter is an anhydride-modified ethylene/propylene copolymer or an anhydride-modified polyethylene copolymer, preferably a maleic anhydride-grafted ethylene/propylene copolymer or a maleic anhydride-grafted polyethylene copolymer.

10. Film according to any one of claims 1 to 9, **characterised in that** the film is of the structure T/V/S or T/V/T/V/S, wherein interlayers are optionally located between the layers V and S.

11. Film according to claim 10, **characterised in that** the film is of the structure T/EVOH/T/V/S; T/V/EVOH/V/T/V/S or T/V/EVOH/V/S, wherein interlayers are optionally located between the layers V and S, and EVOH stands for an ethylene/vinyl alcohol copolymer.

12. Film according to any one of claims 1 to 11, **characterised in that** the film is of a total thickness of 15 to 400µm.

13. Use of a film according to any one of claims 1 to 12 as a packaging film.

14. Use of a film according to any one of claims 1 to 11 as a packaging film for food.

## Revendications

1. Feuille multicouche emboutissable résistant à la stérilisation, comportant une couche de scellage décollable, **caractérisée en ce que** la feuille est constituée
- d'au moins une couche de scellage (S) composée d'un mélange de polymères comportant de 30 à 80% en poids d'un copolymère éthylène/propylène et de 20 à 70% en poids d'un polyéthylène linéaire de basse densité (PEBDL) ayant un point de fusion de cristallite supérieur à 121°C et une densité de 915 à 950 kg/m³,
- d'au moins une couche de support thermoplastique (T) ayant un point de fusion de cristallite supérieur à 155°C constitué d'un matériau choisi dans le groupe des polyamides, polystyrènes, polyesters, polycarbonates, polypropylènes, poly(éthylène/alcool vinylique) et
- d'au moins une couche de liaison (V),
qui sont disposées d'une telle manière qu'une couche de support (T) et une couche de scellage (S) sont disposées sur les faces externes de la feuille.

2. Feuille selon la revendication 1, **caractérisée en ce que** le copolymère éthylène/propylène (E/P) a une teneur en éthylène de 1 à 9% en moles.

3. Feuille selon une des revendications de 1 à 2, **caractérisée en ce que** le PEBDL est un copolymère d'éthylène et d'une alpha-oléfine en C3 à C12 ayant un indice de fluidité à l'état fondu (Melt Flow index - MFI 190/2,16) de 0,1 à 20 g/10 min.

4. Feuille selon une des revendications de 1 à 3, **caractérisée en ce que** le PEBDL est un copolymère d'éthylène et d'une alpha-oléfine en C4, C6 ou C8.

5. Feuille selon une des revendications de 1 à 4, **caractérisée en ce que** la couche de support (T) est constituée de polyamide.

6. Feuille selon la revendication 5, **caractérisée en ce que** le polyamide est composé d'un des polyamides aliphatiques PA 6, PA 11, PA 12, PA 66, PA 6.66, PA 6.8, PA 6.9, PA 6.10, PA 6.11, PA 6.12, d'un copolymère des unités monomères contenues dans ceux-ci, d'un polyamide aromatique ou en partie aromatique ou d'un mélange des polyamides mentionnés.

7. Feuille selon une des revendications de 1 à 6, **caractérisée en ce que** la couche de liaison (V) est composée d'un système adhésif ou d'un agent de pontage polymère.

8. Feuille selon la revendication 7, **caractérisée en ce que** le système adhésif est un système adhésif de polyuréthane à deux composants.

9. Feuille selon la revendication 7, **caractérisée en ce que** l'agent de pontage polymère est un copolymère éthylène/propylène modifié avec de l'anhydride ou un copolymère de polyéthylène modifié avec de l'anhydride, de préférence un copolymère éthylène/propylène greffé avec de l'anhydride d'acide maléique ou un copolymère de polyéthylène greffé avec de l'anhydride d'acide maléique.

10. Feuille selon une des revendications de 1 à 9, **caractérisée en ce que** la feuille comporte un assemblage des couches T / V / S ou T / V / T / S, dans lequel se trouvent éventuellement des couches intermédiaires situées entre les couches V et S.

11. Feuille selon la revendication 10, **caractérisée en ce que** la feuille comporte un assemblage des couches T / EVOH / T / V / S, T / V / EVOH / V / T / V / S ou T/V / EVOH / V / S, dans lequel se trouvent éventuellement des couches intermédiaires situées entre les couches V et S et l'EVOH est un copolymère éthylène/alcool vinylique.

12. Feuille selon une des revendications de 1 à 11, **caractérisée en ce que** l'épaisseur totale de la feuille est de 15 à 400 µm.

13. Utilisation d'une feuille selon une des revendications de 1 à 12 en tant que feuille d'emballage.

14. Utilisation d'une feuille selon une des revendications de 1 à 11 en tant que feuille d'emballage alimentaire.
